# FASCICULE DE BREVET EUROPEEN

(11) **EP 1 659 910 B1**
(45) Date de publication et mention de la délivrance du brevet: **05.05.2010**
(21) Numéro de dépôt: 04764120.4
(22) Date de dépôt: 13.08.2004
(51) Int. Cl.: A47J 31/40

(54) **DISPOSITIF ET METHODE POUR LA PREPARATION D'UNE BOISSON A PARTIR D'UNE SUBSTANCE ALIMENTAIRE CONTENUE DANS UNE CAPSULE**
VORRICHTUNG UND VERFAHREN ZUR ZUBEREITUNG EINES GETRÄNKS AUS EINER IN EINER PATRONE ENTHALTENEN ZUTAT
DEVICE AND METHOD FOR PREPARING A DRINK FROM A FOOD SUBSTANCE CONTAINED IN A CAPSULE

(30) Priorité: 25.08.2003 EP 03019162
(43) Date de publication de la demande: 31.05.2006
(73) Titulaire: Nestec S.A., 1800 Vevey (CH)
(72) Inventeur: DENISART, Jean-Paul, CH-1093 La Conversion (CH); CAPROTTI, Patrick, CH-1072 Forel (CH); DENISART, Jean-Luc, CH-1096 Cully (CH); KOLLEP, Alex, CH-1095 Lutry (CH)
(74) Mandataire: Borne, Patrice Daniel
(86) Numéro de dépôt international: PCT/EP2004/009126
(87) Numéro de publication internationale: WO 2005/020770

(56) Documents cités:
- EP-A- 0 242 556
- EP-A- 1 295 554
- DE-U- 7 430 109
- US-A- 2 589 783

## Description

La présente invention concerne un dispositif pour la préparation d'une boisson à partir d'une substance alimentaire telle qu'une substance à extraire et/ou à dissoudre contenue dans une capsule. Plus particulièrement, l'invention concerne un tel dispositif comprenant un élément de perforation et d'injection perfectionné. L'invention se rapporte aussi à une méthode pour améliorer le mouillage ou la dissolution d'une substance contenue dans une capsule.

L'utilisation de doses prédéterminées et préemballées sous forme de capsule contenant une substance à extraire telle que du café moulu ou une substance à dissoudre telle que des produits chocolatés pour la préparation de boissons présente de nombreux avantages, entre autres ceux de faciliter les opérations de préparation de la boisson, d'assurer une préparation relativement propre et de contrôler un dosage et une qualité relativement constantes de la boisson préparée.

Le principe d'extraction ou de dissolution de substances contenues dans la capsule fermée consiste typiquement à enfermer la capsule dans une enceinte close d'un dispositif de préparation, percer une face de la capsule, injecter sous pression une quantité d'eau chaude dans la capsule de façon à créer un environnement sous pression à l'intérieur de la capsule pour soit extraire la substance, soit la dissoudre, puis libérer l'extrait de substance ou la substance dissoute à travers une face opposée de la capsule, qui au contact de parties en saillie du dispositif s'ouvre sous l'effet de la pression interne.

Des dispositifs permettant la mise en oeuvre de ce principe ont déjà été décrits par exemple dans les brevets CH 605 293 et EP 242 556. Selon ces documents, le dispositif comprend un logement pour la capsule et un élément de perforation et d'injection réalisé sous la forme d'une pointe creuse comportant dans sa région distale un ou plusieurs orifices d'injection de liquide. La pointe a une double fonction en ce qu'elle assure l'ouverture de la partie supérieure de la capsule d'une part, et qu'elle constitue le canal d'arrivée d'eau dans la capsule d'autre part. Il a également été envisagé pour améliorer l'extraction et/ou la dissolution de la substance contenue dans la capsule d'équiper ces dispositifs de plusieurs pointes assurant respectivement la double fonction susmentionnée comme cela est décrit dans le document EP 1 203 554 et dans le document DE7430109U.

D'une part, un inconvénient de tels dispositifs provient du fait que les orifices d'injection de liquide de la pointe ont, compte tenu de leurs faibles dimensions, tendance à s'obstruer rapidement en raison du calcaire de l'eau ou du contact avec la substance notamment lorsque la capsule n'est pas immédiatement retirée de l'appareil et que l'élément de perforation n'est pas rincé après usage, ce qui affecte les performances du dispositif. En particulier, la régularité du débit ainsi que la vitesse de jet diminuent au cours du temps; ce qui affecte les conditions d'extraction, la dissolution de la substance ainsi, par exemple, que la production de mousse.

Il serait donc utile d'avoir un dispositif qui résout ces problèmes.

D'autre part, dans les dispositifs de l'art antérieur, la méthode de mouillage est basée sur la production d'un ou plusieurs jets discrets et dirigés dans une direction préférentielle. Un seul jet discret et dirigé s'avère souvent insuffisant pour mouiller ou dissoudre une masse de substance contenue dans une capsule. De plus, un seul jet crée un chemin préférentiel et forme des trous dans la masse de substance sans toutefois la mouiller ou la dissoudre entièrement. Il est donc commun de faire appel à plusieurs jets dirigés chacun dans des directions différentes. Toutefois, une telle méthode de mouillage ou de dissolution n'est pas entièrement satisfaisante car des chemins préférentiels subsistent.

Il s'agit donc de prévoir une méthode qui mouille ou dissolve de manière plus satisfaisante la substance sans créer de chemins préférentiels mais tout en conservant la vitesse de jet nécessaire de façon à mouiller ou dissoudre correctement la substance et éventuellement, la faire mousser.

L'invention a donc pour but principal de pallier les inconvénients de l'art antérieur susmentionné en fournissant un dispositif pour la préparation d'une boisson à partir d'une substance alimentaire telle qu'une substance à extraire et/ou à dissoudre contenue dans une capsule qui permette notamment d'éviter le risque de réduction de l'écoulement en raison d'obstructions du ou des orifices d'injection de l'élément de perforation et d'injection formées par des dépôts calcaires ou des résidus de substances.

A cet effet , l'invention concerne un dispositif pour la préparation d'une boisson à partir d'une substance alimentaire telle qu'une substance à extraire et/ou à dissoudre contenue dans une capsule, ledit dispositif comprenant un logement pour recevoir la capsule, au moins un élément de perforation et d'injection ayant un canal pour recevoir un liquide sous pression, ledit élément de perforation et d'injection étant agencé pour faire saillie dans ledit logement et percer une face de la capsule dans au moins une position de fonctionnement du dispositif afin de permettre l'introduction d'un liquide à l'intérieur de ladite capsule à partir dudit canal, le dispositif étant **caractérisé en ce que** l'élément de perforation et d'injection présente une extrémité distale agencée sous la forme d'un clapet ayant un obturateur présentant une extrémité, ledit clapet étant agencé pour obturer ledit canal dans une première position, dite position de repos, et pour s'ouvrir sous l'effet de la pression du liquide à l'encontre d'un élément élastique de façon à libérer un passage en fonction de la pression et créer ainsi une couche de liquide projetée à travers ledit passage dans une deuxième position, dite position de travail.

Une telle configuration de l'élément de perforation et d'injection a pour avantage d'être autonettoyant dans la mesure où en l'absence de pression du liquide le passage de circulation de celui-ci est fermé et ne s'ouvre qu'après la mise en pression du liquide dans le canal. Comme en l'absence de pression le passage est fermé par l'obturateur, on évite tout problème d'obstruction par le calcaire ou des résidus de substance, même si la capsule n'a pas été retirée de l'appareil immédiatement après usage.

Selon un mode préféré de l'invention, l'élément de perforation et d'injection est disposé sensiblement au centre du logement de la capsule et est agencé de manière à produire un arrosage divergent multidirectionnel sous la forme d'au moins une couche de liquide. La fine couche s'étend avantageusement de manière continue sur le pourtour de la pointe pour arroser la substance contenue dans la capsule de manière sensiblement circulaire. Cette configuration particulière permet ainsi de distribuer de façon simple une couche d'eau régulière sur un secteur de 360 degrés.

De manière préférentielle, l'extrémité de l'élément de perforation et d'injection est configurée en forme de pointe de façon à perforer ou déchirer la face de la capsule et permettre ensuite l'introduction de l'élément dans la capsule.

De manière préférée, l'élément de perforation et d'injection comprend un corps tubulaire définissant le canal. Ce corps tubulaire comporte un orifice proximal destiné à être raccordé à une arrivée de liquide et un orifice distal définissant avec ladite pointe ledit passage. L'orifice distal et l'orifice proximal sont reliés par ledit canal, et ledit obturateur présente une partie arrière de guidage coulissant dans ledit corps tubulaire tandis que l'extrémité en pointe comprend une surface périphérique extérieure qui s'étend dans le prolongement de la surface périphérique extérieure dudit corps tubulaire.

Grâce à cette structure, l'obturateur peut être en appui contre le corps tubulaire de l'élément de perforation et d'injection au moment de la perforation de sorte qu'il ne perturbe pas la perforation de l'opercule. De plus, l'obturateur ne risque pas de s'accrocher sur l'opercule lors du dégagement de l'élément de la capsule.

L'invention a aussi pour but de proposer une nouvelle méthode de mouillage et/ou de dissolution d'une substance contenue dans une capsule pour la production d'une boisson consistant, au moyen d'un élément de perforation et d'injection, à percer la capsule et injecter un liquide sous pression dans la capsule pour provoquer le mouillage et/ou la dissolution de la substance. L'élément est arrangé de manière à injecter le liquide dans la capsule sous la forme d'au moins une fine couche s'étendant de manière continue, divergente et multidirectionnelle couvrant une surface d'arrosage selon un arc de cercle à l'intérieur de la capsule. Ainsi, une telle configuration d'arrosage a pour avantage de disperser le liquide sur une surface importante, en conservant les avantages de puissance et de vitesse d'un jet mais tout en évitant les inconvénients des jets discrets et dirigés qui créent des trous ou chemins préférentiels au travers de la substance. Lorsque de tels trous ou chemins préférentiels sont créer, une partie de la substance n'est pas extraite ou dissoute; ce qui cause une perte en matière solide et en arômes de la boisson et donc une moindre qualité de celle-ci.

De préférence, la fine couche couvre une surface d'arrosage comprise entre 30 et 360 degrés de préférence 120 et 360 degrés dans la capsule. L'injection peut se faire à partir de l'axe central de la capsule; dans ce cas il est préférable d'avoir une couche ou nappe multidirectionnelle circulaire s'étendant sur 360 degrés.

L'injection peut aussi être décalée par rapport à l'axe central; dans ce cas, il est préférable d'avoir au moins deux couches d'arrosage, chacune d'elles arrosant selon un arc de 45 à 180 degrés de préférence 120 à 180 degrés. La couche d'arrosage est préférentiellement dirigée de manière transversale, relativement à la direction de sortie de la boisson hors de la capsule, de façon à arroser la plus large surface possible et permettre ainsi ensuite l'écoulement du liquide injecté au travers de la masse. Ainsi, on assure un mouillage de toute la masse et moins de chemins préférentiels. En général, la direction de sortie de la boisson correspond à l'axe de la capsule et donc à la verticale ou à une direction proche de la verticale. La direction de la couche ou nappe pourrait aussi être légèrement inclinée par rapport à cette direction transversale, vers le bas ou vers le haut, en particulier jusqu'à 30 degrés environ.

De préférence, la fine couche possède une épaisseur inférieure ou égale à 0.5 mm, et de préférence inférieure à 0.3 mm. De telles épaisseurs garantissent que le liquide sorte sous forme d'un jet possédant suffisamment d'énergie cinétique pour dissoudre les substances solubles et vaincre la perte de charge produite lors du passage du liquide à travers les substances à extraire pour atteindre les bords de la capsule.

La fine couche est obtenue par au moins une fente de l'élément de perforation ou d'injection; laquelle fente peut être fixe ou, au contraire, ouverte seulement au moment de l'injection en réponse à la pression du fluide. L'avantage de l'ouverture de la fente sous l'effet de la pression du fluide est son caractère autonettoyant qui garantit une reproductibilité du mouillage et/ou de la dissolution de la substance cycle après cycle. Toutefois, une nappe fixe est de conception plus simple et plus économique.

D'autres caractéristiques et avantages de l'invention apparaîtront à la lecture de la description d'un exemple de réalisation, donné à titre illustratif et non limitatif, en référence aux dessins annexés dans lesquels:
- les figures 1 et 2 sont des vues en coupe d'un dispositif pour la préparation d'une boisson selon un mode préféré, le dispositif étant représenté dans deux modes de fonctionnement différents;
- la figure 3 est une vue en coupe de l'élément de perforation et d'injection du dispositif selon l'invention;
- les figures 4 et 5 sont des vues en perspective et en coupe partielle d'un détail de l'élément de perforation respectivement en position de repos et en position de travail.;
- les figures 6a et 6b sont des vues schématiques respectivement en perspective et en perspective coupée d'une variante de réalisation de l'élément de perforation et d'injection utilisable dans le dispositif de l'invention.

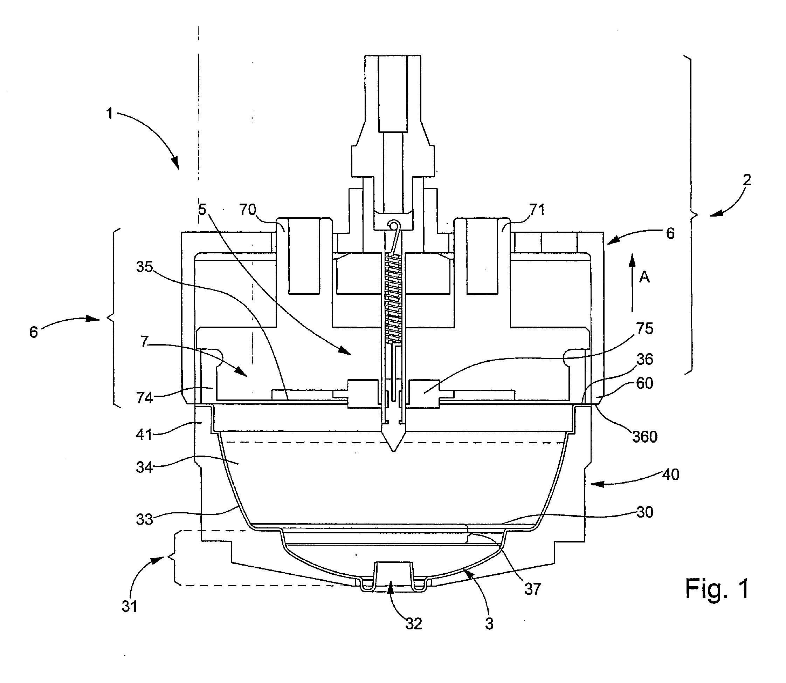

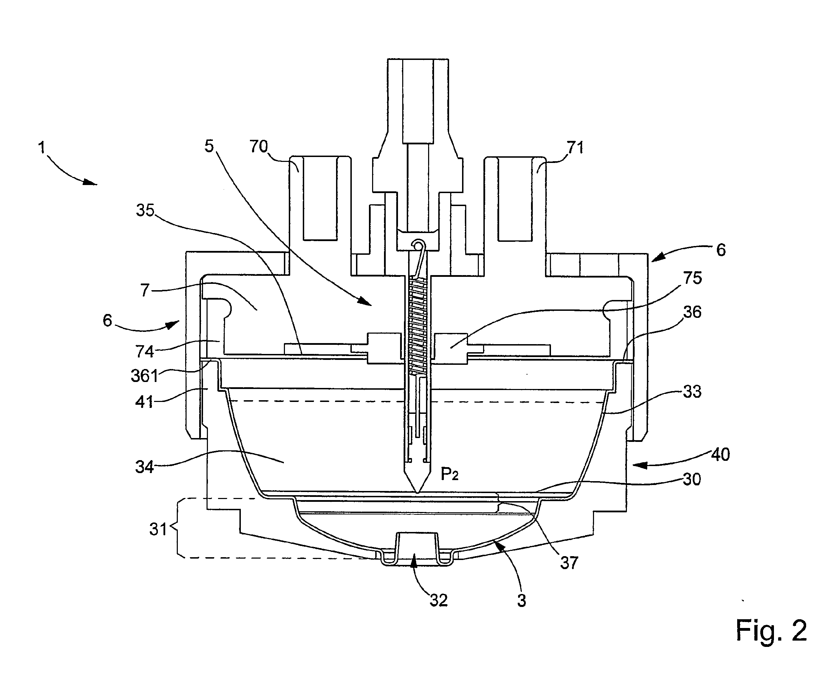

En référence aux figures 1 et 2, un mode de réalisation d'un dispositif de préparation 1 est illustré en coupe, qui comprend un système de perforation et d'injection 2 d'un fluide sous pression, de préférence de l'eau froide ou chaude, qui est dans l'exemple représenté commutable selon au moins deux positions de profondeur d'injection différentes à l'intérieur d'une capsule 3. Le dispositif comprend un premier sous-ensemble inférieur sous forme d'un support de capsule 40 lequel a une forme et une taille adaptées à recevoir en partie au moins la capsule 3. La capsule 3 peut être une capsule fermée, ouverte ou partiellement ouverte.

Selon un mode préféré, la capsule comprend une chambre fermée contenant la substance à extraire et/ou à dissoudre et une portion de retenue telle qu'une membrane 30 laquelle s'ouvre, sous l'effet de la montée en pression à l'intérieur de la chambre, au contact de moyens d'engagement tels que des éléments en reliefs 37. Les moyens d'engagement peuvent soit faire partie de la capsule elle-même, soit faire partie du support de capsule 40. La capsule peut aussi préférentiellement comprendre des moyens de collecte 31 du liquide extrait ou du mélange et un moyen de conduit 32 qui lui sont propres, ce qui a pour avantage, en combinaison avec les moyens d'ouvertures intégrés, de délivrer un produit sans contact direct avec le dispositif, en particulier, avec le support de capsule 40, ce qui assure une absence de contamination croisée des boissons, une meilleure hygiène, moins de nettoyage et une plus grande simplicité dans la conception même du dispositif de préparation. Plus précisément, la capsule peut comprendre une coupe 33, en plastique ou autre, pour former ou loger les éléments fonctionnels, à savoir les éléments en reliefs, la membrane d'ouverture scellée 30 et les moyens de conduit 32. La coupe 33 peut être fermée pour former la chambre 34 au moyen d'une seconde membrane d'entrée 35 scellée sur des bords de scellage 36 de la capsule. La configuration de la capsule peut, bien entendu, prendre bien d'autres concepts et/ou formes sans pour autant sortir du cadre de l'invention. La capsule pourrait, par exemple, comprendre un corps formé en grande partie en matière souple (sachet) qui s'insère dans le dispositif de façon équivalente.

Une capsule préférée est décrite plus en détails dans la demande de brevet Euro-PCT No. 03/00384 déposée le 13 janvier 2003, dont le contenu en entier est incorporé ici par référence.

Le dispositif 1 comprend un second sous-ensemble ou système de perforation et d'injection 2 qui coopère en fermeture avec le support de capsule 40 pour définir un logement pour recevoir la capsule 3. Le système de perforation et d'injection 2 comprend un élément de perforation et d'injection 5 central ayant un canal pour recevoir un liquide sous pression, l'élément de perforation et d'injection 5 étant agencé pour faire saillie dans ledit logement et percer la capsule 3 dans au moins une position de fonctionnement du dispositif 1 afin de permettre l'introduction d'un liquide dans la capsule 3 à partir du canal. Le système de perforation et d'injection 2 est associé à un moyen d'actionnement 6 solidaire de l'élément 5 de manière à le déplacer dans l'exemple illustré dans divers position de mouillage à l'intérieur de la capsule. Pour cela, l'élément de perforation et d'injection 5 passe au travers d'un noyau 7 lequel est déplacé en fermeture relativement au support de capsule 40. Il est entendu que la base de tête peut être mobile relativement à un support 40 fixe ou inversement, ou encore, les deux peuvent être mobiles en fermeture. Sur le noyau 7 est monté le moyen d'actionnement sous forme d'un support mobile en forme de cloche appelé "cloche mobile 6" dans la suite de la description. Le noyau 7 est guidé en translation par rapport à la cloche mobile 6 au moyen de plusieurs tubes de guidage 70, 71 associés à des moyens de rappel (non représentés), de sorte qu'en position d'ouverture du dispositif le noyau 7 soit appliqué sensiblement dans le fond de la cloche mobile.

Le noyau 7 comprend, en outre, des moyens d'étanchéité périphériques 74 tels qu'un joint élastomère agencé pour s'appuyer en fermeture contre les bords périphériques 41 du support de capsule 40. Le noyau 7 est donc la partie qui s'applique au plus près de la surface d'entrée de la capsule au moment de la fermeture, ce qui permet l'introduction de l'élément de perforation et d'injection central 5 au travers de la capsule, plus précisément, au travers de la membrane d'entrée 35 de la capsule. Un élément d'étanchéité supplémentaire 75 peut aussi entourer l'élément de perforation et d'injection pour éviter une remontée de fluide au travers du système d'injection et en dehors du dispositif.

Dans l'exemple illustré, le moyen d'actionnement de l'élément de perforation et d'injection ou cloche mobile est solidaire de l'élément 5 et permet, en fonction de sa position relative par rapport au support de capsule, de modifier la position de l'élément de perforation et d'injection dans la capsule et donc de changer la configuration de mouillage de la substance contenue dans la chambre fermée de la capsule. Plus précisément, la cloche mobile 6 possède des moyens de détection en fonction du type même de capsule qui sont formés par des bords d'engagement 60 aptes à engager des bords complémentaires 360 de la capsule et donc, par conséquent, qui sont aptes à repousser la cloche 6 par rapport à la base de tête 7 selon la direction A en fonction de la largeur des bords de la capsule (comme le montre la figure 2). La position d'introduction de l'élément de perforation et d'injection peut donc prendre deux positions distinctes, selon que la capsule possède des bords larges ou extensions de bords qui s'engagent à l'encontre des bords de la cloche 6 ou une configuration de bords étroite, telle que les bords de la cloche ne rencontrent pas de bords complémentaires de la capsule. A la figure 1, le dispositif est dans une configuration dans laquelle la capsule possède des extensions ou bords larges 36 pour permettre de repousser la cloche 6 et donc d'arrêter l'élément de perforation et d'injection 3 dans une position d'introduction proche de l'entrée de la capsule 3. Une telle position permet d'injecter le fluide sensiblement au niveau de l'entrée du lit de substance, ce qui convient bien aux produits moulus à extraire, par exemple.

La figure 2 montre une configuration dans laquelle la capsule possède des bords plus étroits qui laissent passer la cloche 6 le long du support de capsule lors de la fermeture du dispositif sans la repousser. Dans ce cas, l'élément de perforation et d'injection 5 est autorisé à atteindre une position plus profonde dans la capsule 3. Une telle position s'avère avantageuse pour mouiller la substance par sa base, entraînant ainsi une désagrégation progressive de la masse de substance. Pour les substances solubles, par exemple, un tel mode de mouillage s'avère particulièrement efficace.

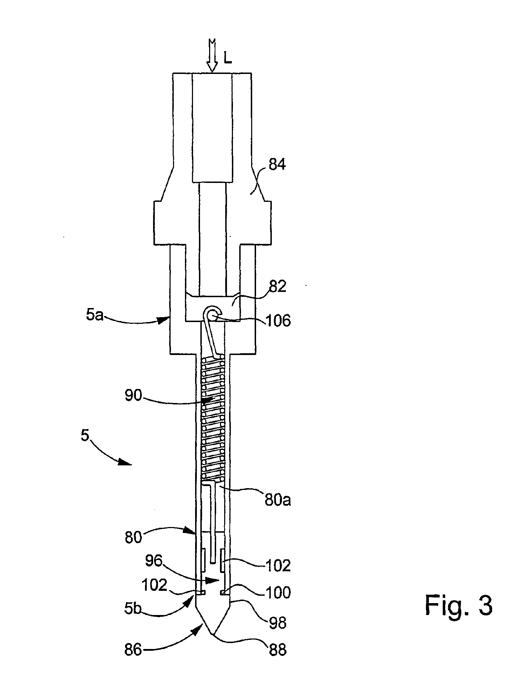

Les figures 3 à 5 montrent en détail un mode de réalisation préféré de l'élément de perforation et d'injection 5 équipant le dispositif de l'invention. On voit notamment à la figure 3 que l'élément de perforation et d'injection 5 comprend un corps tubulaire 80 définissant un passage central ou canal 80a pour recevoir un liquide sous pression symbolisé par la flèche L provenant d'une alimentation en liquide, typiquement en eau chaude d'un dispositif (non représenté).

L'extrémité proximale 5a comprend un orifice 82 débouchant dans le canal 80a et dans lequel est emmanché, de manière étanche, un embout de connexion 84 à l'alimentation en eau du dispositif.

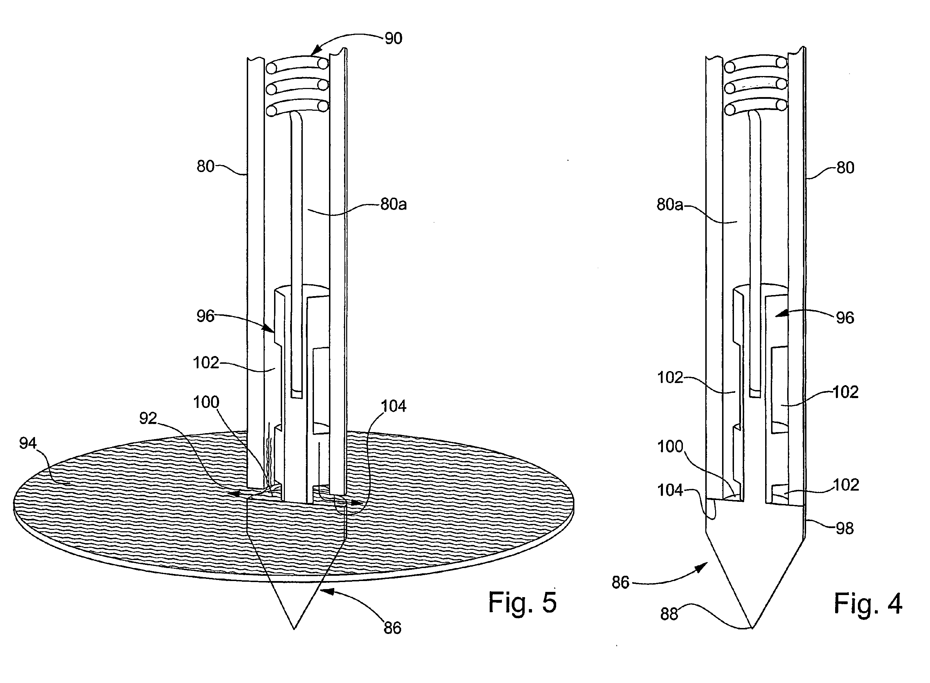

L'extrémité distale 5b de l'élément 5 est agencée sous la forme d'un clapet comprenant un obturateur 86 mobile agencé pour obturer le canal 80a dans sa partie distale, dans une première position dite position de repos (figure 3 et figure 4) et pour dans une deuxième positon dite position de travail s'ouvrir sous l'effet de la pression du liquide L à l'encontre d'un élément élastique 90 de façon à libérer un orifice distal ou passage 92 (figure 5) et créer une couche de liquide 94 projetée à travers le passage 92.

L'obturateur 86 présente une partie extrême 86 de forme généralement conique se terminant en pointe et une partie arrière de guidage 96 coulissant dans le canal 80a du corps tubulaire 80. La portion en pointe 88 de l'obturateur 86 a pour fonction la perforation de la membrane d'entrée 35 de la capsule 3 lors de la mise en oeuvre du dispositif, tandis que la partie arrière 96 à pour fonction de guider le mouvement de l'obturateur dans le corps tubulaire 80.

On voit également aux figures 3 à 5 que la portion en pointe de l'obturateur 86 comprend une surface périphérique extérieure 98 qui s'étend dans le prolongement de la surface périphérique extérieure du corps tubulaire 80. Cette configuration permet de faciliter l'extraction de l'élément de perforation 5 de la capsule 3 et d'éviter les risques d'accrochage de l'obturateur 86 sur l'opercule 35 lors de cette extraction.

L'obturateur 86 comprend en outre, à l'arrière de son extrémité en pointe, une surface d 'épaulement 100 qui peut s'appuyer contre une surface annulaire 104 de forme complémentaire, ménagée à l'extrémité distale du corps tubulaire 80 lorsque l'obturateur est dans sa position de repos.

Afin que le liquide puisse circuler depuis l'orifice proximal vers la surface d'épaulement 100 et s'écouler dans la capsule à travers le passage 92 lorsque l'obturateur 86 est dans sa position de travail, la partie arrière de guidage 96 de l'obturateur comprend des ouvertures 102.

L'obturateur 86 est par ailleurs associé à l'élément élastique 90 s'étendant dans le canal 80a qui permet de rappeler l'obturateur 86 dans sa position de repos, position dans laquelle la surface d'épaulement 100 s'appuie contre la surface annulaire 104 pour supprimer le passage 92 et obturer le canal 80a de façon étanche. Selon une variante non représentée, un joint d'étanchéité peut être interposé entre la surface d'épaulement 100 et la surface annulaire 104. L'organe élastique 90 comprend de préférence un ressort hélicoïdal dont une première extrémité rectiligne s'étendant selon l'axe longitudinal du canal 80a est fixée à la partie arrière de guidage 96, par exemple par chassage dans celle dernière, et une deuxième extrémité est fixée à l'intérieur du corps tubulaire. Dans l'exempte illustré, la deuxième extrémité présente la forme d'un crochet qui est accroché sur une goupille 106 chassée transversalement dans le corps tubulaire au niveau de l'orifice 82.

Dans l'exemple illustré, l'élément de perforation et d'injection 5 est disposé sensiblement au centre du logement recevant la capsule 3 et les ouvertures 102 ménagées dans la partie arrière de guidage 96 sont agencées pour produire un arrosage divergeant multidirectionnel sous la forme d'une couche de liquide 94 s'étendant de manière continue sur le pourtour de la pointe de l'élément 5. Cette configuration permet un arrosage de la substance contenue dans la capsule 3 de manière homogène et circulaire.

Comme la dimension de l'ouverture du passage 92 est fonction à la fois de la pression d'injection du liquide L dans l'élément 5 et de la force de rappel de l'élément élastique 90, ces deux paramètres peuvent être ajustés pour obtenir une couche de liquide ayant une épaisseur désirée. De préférence, ces paramètres seront ajustés pour obtenir une couche de liquide 94 inférieure à 0,5mm, typiquement de 0,3mm.

On peut également envisager en variante de configurer les ouvertures 102 dans la partie arrière de guidage 96 afin de créer une couche de liquide de forme différente, par exemple en forme de secteur circulaire, notamment dans le cas où l'élément de perforation et d'injection 5 n'est plus disposé au centre du logement recevant la capsule 3 mais à la périphérie de celui-ci.

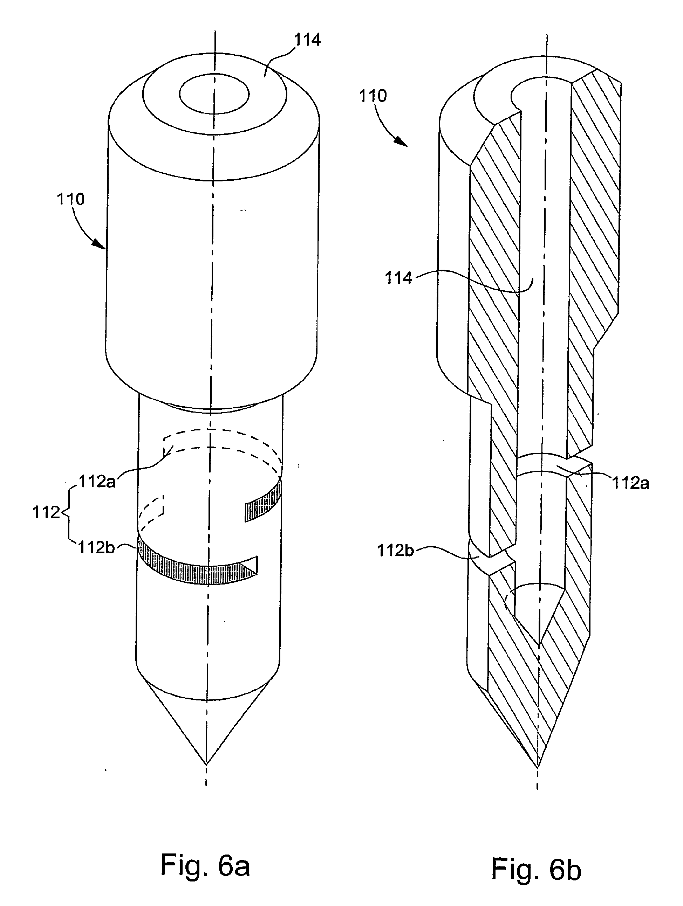

Aux figures 6a et 6b on a représenté une variante de réalisation de l'élément de perforation et d'injection, désignée par la référence 110 utilisable dans un dispositif selon l'invention. Comme cela ressort de ces figures, l'élément de perforation et d'injection 110 comprend des moyens d'injection 112 permettant de produire un jet divergent sous la forme d'une fine couche de liquide. Ces moyens 112 comprennent, dans l'exemple illustré deux fentes fixes 112a et 112b s'étendant transversalement à la direction longitudinale de l'élément 110 et communiquant avec le canal d'arrivée du liquide 114. Par fente fixe on comprendra une fente dont la forme et les dimensions ne varient pas au cours du temps. Les deux fentes couvrent respectivement un secteur angulaire complémentaire pour couvrir ensemble un secteur de 360 degrés. L'élément de perforation et d'injection 110 produit ainsi une jet divergent s'étendant sur un secteur circulaire suffisamment large pour mouiller sensiblement la totalité de la substance se trouvant dans la partie supérieure de la capsule notamment lorsqu'il est disposé au centre de la capsule. Pour des raisons liées à la fabrication de l'élément 110, on notera que les fentes 112a et 112b sont décalées en hauteur l'une par rapport à l'autre. Il va de soi que le nombre et la forme des fentes ne sont pas limités à l'exemple décrit et que l'homme de métier pourra envisager un nombre et des formes de fentes différents dès lors que cela permet d'obtenir un jet couvrant le secteur angulaire désiré.

On notera que les fentes 112a et 112b sont respectivement agencées pour que la fine couche de liquide soit produite de manière sensiblement continue sur un secteur angulaire de 360 degrés. En outre, ces fentes sont agencées pour produire une couche de liquide ayant une épaisseur inférieure ou égale à 0,5mm et de préférence inférieure à 0,3mm. A cet effet, pour chacune des fentes on choisira de préférence une hauteur de l'ordre de 0.5mm.

Selon une variante avantageuse non représentée de cette variante de réalisation, l'axe des fentes 112a et 112b définissant la direction du jet de liquide, fait un angle compris entre 0° et 25° avec l'horizontale et de préférence un angle de l'ordre 15°. Le liquide injecté par ces orifices est ainsi dirigé vers le haut et se réfléchit dans un premier temps contre la surface inférieure de l'opercule 35 et est renvoyé dans un second temps vers le lit de substance en étant beaucoup plus dispersé. Ce faisant, l'homogénéité du mouillage de la substance est améliorée.

Bien entendu on peut aussi envisager de disposer l'élément de perforation et d'injection 110 de manière excentrée à l'intérieur de la capsule, et plus précisément au voisinage de la paroi latérale de celle-ci. Dans ce cas, une ou plusieurs fentes seront dirigées vers le centre de la capsule pour produire une pluralité de jets divergents qui se recouvrent pour former une fine couche de liquide qui arrose et mouille la substance contenue dans la partie supérieure la capsule sur un secteur angulaire compris entre 120 et 360° et de préférence de l'ordre de 180°.

On peut aussi envisager de réaliser la fine couche de liquide par une multitude d'orifices discrets séparés répartis en nombre suffisant sur un secteur angulaire au travers de l'élément de perforation et d'injection. Les orifices devront être alors suffisamment rapprochés pour ne pas créer de zones d'air mais au contraire former une couche de liquide relativement continue.

L'invention n'est bien entendu pas limitée au mode de réalisation décrit ci-dessus et on comprendra que diverses modifications et/ou améliorations évidentes pour l'homme de métier pourront y être apportées sans sortir du cadre de l'invention définie par les revendications annexées.

## Revendications

1. Dispositif pour la préparation (1) d'une boisson à partir d'une substance alimentaire telle qu'une substance à extraire et/ou à dissoudre contenue dans une capsule (3), ledit dispositif comprenant un logement (40) pour recevoir la capsule (3), au moins un élément de perforation et d'injection (5) ayant un canal (80a) pour recevoir un liquide sous pression, ledit élément de perforation et d'injection (5) étant agencé pour faire saillie dans ledit logement et percer une face de la capsule (3) dans au moins une position de fonctionnement du dispositif afin de permettre l'introduction d'un liquide à l'intérieur de ladite capsule (3) à partir dudit canal (80a), ledit dispositif (1) étant **caractérisé en ce que** l'élément de perforation et d'injection (5) présente une extrémité distale (5b) agencée sous la forme d'un clapet ayant un obturateur (86) présentant une extrémité, ledit clapet étant agencé pour obturer ledit canal (80a) dans une première position dite position de repos et pour s'ouvrir sous l'effet la pression du liquide à l'encontre d'un élément élastique (90) de façon à libérer un passage (92) en fonction de la pression et créer ainsi une couche de liquide (94) projetée à travers ledit passage (92) dans une deuxième position dite position de travail.

2. Dispositif selon la revendication 1, **caractérisé en ce que** l'élément de perforation et d'injection (5) est disposé sensiblement au centre du logement de la capsule (3) et est agencé de manière à produire un arrosage divergent multidirectionnel sous la forme d'au moins une couche de liquide.

3. Dispositif selon la revendication 1 ou 2, **caractérisé en ce que** la fine couche s'étend de manière continue sur le pourtour de la pointe (88) et arrose la substance contenue dans la capsule (3) de manière sensiblement circulaire.

4. Dispositif selon l'une de revendications 1 à 3, **caractérisé en ce que** l'élément de perforation et d'injection (5) comprend un corps tubulaire (80) définissant ledit canal (80a), **en ce que** le corps tubulaire (80) comporte un orifice proximal (82) destiné à être raccordé à une arrivée de liquide (84) et un orifice distal (92) définissant avec ladite pointe (88) ledit passage (92), l'orifice distal (92) et l'orifice proximal (82) étant relié par ledit canal (80a), et **en ce que** ledit obturateur (86) présente une partie arrière de guidage (96) coulissant dans ledit corps tubulaire (80a).

5. Dispositif selon l'une de revendications précédentes, **caractérisé en ce que** ladite extrémité (86) en pointe comprend une surface périphérique extérieure (98) qui s'étend dans le prolongement de la surface périphérique extérieure dudit corps tubulaire (80).

6. Dispositif selon la revendication 5, **caractérisé en ce que** ledit obturateur (86) comprend à l'arrière de son extrémité en pointe une surface d'épaulement (100) susceptible de venir s'appliquer contre une surface annulaire (104) d'extrémité dudit corps tubulaire (80) et **en ce que** ladite partie arrière de guidage (96) comporte des ouvertures (102) permettant la circulation d'un liquide depuis l'orifice proximal (82) vers ladite surface d'épaulement (100) et à travers ledit passage (92) en position de travail.

7. Dispositif selon l'une de revendication 6, **caractérisé en ce que** la surface d'épaulement (100) de l'obturateur (86) est maintenue contre ladite surface annulaire (104) par ledit élément élastique (90) en l'absence de pression du liquide, le canal (80a) étant alors obturer de façon étanche.

8. Dispositif selon l'une de revendication 6, **caractérisé en ce que** l'élément élastique (90) comprend un ressort hélicoïdal s'étendant dans ledit canal (80a) et **en ce que** ledit ressort est fixé par une première extrémité à ladite partie arrière de guidage (96) de l'obturateur et par une deuxième extrémité à un élément d'accrochage solidaire du corps tubulaire (80).

9. Dispositif selon l'une quelconque des revendications précédentes, **caractérisé en ce que** la couche de liquide présente une épaisseur inférieure ou égale à 0,5 mm et de préférence inférieure à 0,3mm.

## Claims

1. Device for preparing (1) a drink from a food substance, such as a substance to be extracted and/or dissolved, contained in a capsule (3), the said device comprising a housing (40) for receiving the capsule (3), at least one piercing and injection element (5) having a channel (80a) for receiving a liquid under pressure, the said piercing and injection element (5) being designed to project into the said housing and pierce a face of the capsule (3) in at least one position of operation of the device so as to allow a liquid to be introduced into the said capsule (3) from the said channel (80a), the said device (1) being **characterised in that** the piercing and injection element (5) has a distal end (5b) designed in the form of a valve having a closure means (86) with an end, the said valve being designed to close off the said channel (80a) in a first position, called the rest position, and to open under the effect of the pressure from the liquid against an elastic element (90) so as to free a passage (92) as a function of the pressure and thus create a layer of liquid (94) sprayed through the said passage (92) in a second position, called the working position.

2. Device according to Claim 1, **characterised in that** the piercing and injection element (5) is arranged substantially at the centre of the housing of the capsule (3) and is designed to produce a multidirectional divergent spray in the form of at least one layer of liquid.

3. Device according to Claim 1 or 2, **characterised in that** the thin layer extends continuously around the periphery of the point (88) and sprays the substance contained in the capsule (3) in a substantially circular manner.

4. Device according to one of Claims 1 to 3, **characterised in that** the piercing and injection element (5) comprises a tubular body (80) defining the said channel (80a), **in that** the tubular body (80) has a proximal orifice (82) for connection to a liquid intake (84) and a distal orifice (92) defining the said passage (92) with the said point (88), the distal orifice (92) and the proximal orifice (82) being linked by the said channel (80a), and **in that** the said closure means (86) has a rear guide part (96) that slides in the said tubular body (80a).

5. Device according to one of the preceding claims, **characterised in that** the said pointed end (86) comprises an external peripheral surface (98) lying in the extension of the external peripheral surface of the said tubular body (80) .

6. Device according to Claim 5, **characterised in that** the said closure means (86) comprises, behind its pointed end, a shoulder surface (100) capable of bearing against an annular end surface (104) of the said tubular body (80) and **in that** the said rear guide part (96) has openings (102) allowing a liquid to flow from the proximal orifice (82) to the said shoulder surface (100) and through the said passage (92) in the working position.

7. Device according to Claim 6, **characterised in that** the shoulder surface (100) of the closure means (86) is held against the said annular surface (104) by the said elastic element (90) in the absence of pressure from the liquid, the channel (80a) then being closed off in a sealed manner.

8. Device according to Claim 6, **characterised in that** the elastic element (90) comprises a helical spring extending in the said channel (80a) and **in that** the said spring is fastened to the said rear guide part (96) of the closure means by a first end and to a hook attachment element integral with the tubular body (80) by a second end.

9. Device according to any one of the preceding claims, **characterised in that** the layer of liquid has a thickness of less than or equal to 0.5 mm and preferably of less than 0.3 mm.

## Patentansprüche

1. Vorrichtung (1) zur Zubereitung eines Getränkes ausgehend von einer Lebensmittelsubstanz wie beispielsweise einer zu extrahierenden und/oder aufzulösenden Substanz, die in einer Kapsel (3) enthalten ist, wobei diese Vorrichtung eine Aufnahme (40), um die Kapsel (3) aufzunehmen, und mindestens ein Perforierungs- und Einspritzelement (5) mit einem Kanal (80a), um eine unter Druck stehende Flüssigkeit aufzunehmen, aufweist, wobei dieses Perforierungs- und Einspritzelement (5) so ausgeführt ist, dass es in die genannte Aufnahme hineinragt und eine Seite der Kapsel (3) in mindestens einer Betriebsstellung der Vorrichtung durchbohrt, um das Einführen einer Flüssigkeit aus dem genannten Kanal (80a) ins Innere dieser Kapsel zu ermöglichen,
**dadurch gekennzeichnet,**
**dass** das Perforierungs- und Einspritzelement (5) ein entferntes Ende (5b) aufweist, das in der Funktion eines Ventils mit einem Verschluss (86) mit einem Ende ausgeführt ist, wobei dieses Ventil dergestalt ausgeführt ist, dass es den Kanal (80a) in einer ersten Stellung, der so genannten Ruhestellung, verschließt und sich unter der Einwirkung des Drucks der Flüssigkeit, der einem Federelement (90) entgegenwirkt, öffnet, so dass in Abhängigkeit von dem Druck ein Durchlass (92) freigegeben wird und so eine Flüssigkeitsschicht (94) erzeugt wird, die in einer zweiten Stellung, der so genannten Arbeitsstellung, durch den Durchlass (92) gespritzt wird.

2. Vorrichtung nach Anspruch 1,
**dadurch gekennzeichnet,**
**dass** das Perforierungs- und Einspritzelement (5) im Wesentlichen in der Mitte der Aufnahme der Kapsel (3) angeordnet ist und dergestalt ausgeführt ist, dass es ein divergentes Sprühen in mehrfachen Richtungen in der Form von mindestens einer Flüssigkeitsschicht erzeugt.

3. Vorrichtung nach Anspruch 1 oder 2,
**dadurch gekennzeichnet,**
**dass** die dünne Schicht sich um die Spitze (88) herum ununterbrochen erstreckt und die in der Kapsel (3) enthaltene Substanz im Wesentlichen kreisförmig besprüht.

4. Vorrichtung nach einem der Ansprüche 1 bis 3,
**dadurch gekennzeichnet,**
**dass** das Perforierungs- und Einspritzelement (5) einen rohrförmigen Körper (80) aufweist, der den genannten Kanal (80a) bildet, dass der rohrförmige Körper (80) eine nahe gelegene Öffnung (82) aufweist, die dazu bestimmt ist, an eine Flüssigkeitszufuhr (84) angeschlossen zu werden, sowie eine entfernt liegende Öffnung (92) aufweist, die mit der Spitze (88) den Durchlass (92) bildet, wobei die entfernt liegende Öffnung (92) und die nahe gelegene Öffnung (82) durch den Kanal (80a) miteinander verbunden sind, und dass der Verschluss (86) einen hinteren Führungsteil (96) aufweist, der in dem rohrförmigen Körper (80) gleitet.

5. Vorrichtung nach einem der vorherigen Ansprüche,
**dadurch gekennzeichnet,**
**dass** das spitze Ende (86) eine Umfangsaußenfläche (98) aufweist, die sich in der Verlängerung der Umfangsaußenfläche des rohrförmigen Körpers (80) erstreckt.

6. Vorrichtung nach Anspruch 5,
**dadurch gekennzeichnet,**
**dass** der Verschluss (86) hinter seinem spitz zulaufenden Ende eine Absatzfläche (100) aufweist, die geeignet ist, in Anlage an einer ringförmigen Fläche (104) des Endes des rohrförmigen Körpers (80) zu kommen, und dass der hintere Führungsteil (96) Öffnungen (102) enthält, die in Arbeitsstellung das Strömen einer Flüssigkeit von der nahe gelegenen Öffnung (82) in Richtung der Absatzfläche (100) und durch den Durchlass (92) ermöglichen.

7. Vorrichtung nach Anspruch 6,
**dadurch gekennzeichnet,**
**dass** die Absatzfläche (100) des Verschlusses (86) durch das Federelement (90), solange kein Druck der Flüssigkeit vorhanden ist, in Anlage an der ringförmigen Fläche (104) gehalten wird, wobei der Kanal (80a) dann dicht verschlossen ist.

8. Vorrichtung nach Anspruch 6,
**dadurch gekennzeichnet,**
**dass** das Federelement (90) aus einer Spiralfeder besteht, die sich in dem Kanal (80a) erstreckt, und dass diese Feder mit einem ersten Ende an dem hinteren Führungsteil (96) des Verschlusses (86) und mit einem zweiten Ende an einem Einhängelement, das fest mit dem rohrförmigen Körper (80) verbunden ist, befestigt ist.

9. Vorrichtung nach einem der vorherigen Ansprüche,
**dadurch gekennzeichnet,**
**dass** die Flüssigkeitsschicht eine Dicke von weniger als oder gleich 0,5 mm und vorzugsweise von weniger als 0,3 mm aufweist.
